# EUROPEAN PATENT APPLICATION

(11) **EP 4 560 492 A1**
(43) Date of publication of application: **28.05.2025**
(21) Application number: 24214472.3
(22) Date of filing: 21.11.2024
(51) Int. Cl.: G06F 16/353, G06F 16/36, G06F 40/295

(54) **ENTITY RESOLUTION BASED ON ONTOLOGY STRUCTURES**

(30) Priority: 21.11.2023 US 202363601644 P
(71) Applicant: Palantir Technologies Inc., Denver, CO 80202 (US)
(72) Inventor: AMARAL, Gabriel, Denver, 80202 (US); TYSHEVSKYI, Pavlo, Denver, 80202 (US); NICOLAS, Geoffroy, Denver, 80202 (US); PETIT, Corentin, Denver, 80202 (US); OLIVIER-AUTRAN, Fanny, Denver, 80202 (US); GREGOIR, Theophane, Denver, 80202 (US)
(74) Representative: Derry, Paul Stefan

(57) **Abstract**

A system for managing entity resolution processes is disclosed. The system is programmed to determine whether incoming records correspond to known entities within an ontology framework. The system is also programmed to manage a graphical user interface (GUI) that allows customizing entity resolution operations and providing feedback on the determination results. The system is further programmed to use the provided feedback to improve machine learning for the entity resolution processes.

## Description

### TECHNICAL FIELD

The present disclosure relates to entity resolution, and more particularly to matching records using machine learning.

### BACKGROUND

Entity Resolution is the process through which records in multiple data sources are compared in order to discern whether or not they likely refer to the same real-world entity. Entity resolution can be used in anti-money laundering, for example, to detect whether records in a given list are likely to correspond to the same entities being sanctioned as records in a collection of target lists. The potentially large volume of records to be reviewed poses various challenges. Therefore, it would be helpful to be able to efficiently match records and resolve them to appropriate entities.

### SUMMARY

The appended claims may serve as a summary of the invention.

### BRIEF DESCRIPTION OF THE DRAWINGS:

Example embodiments will now be described by way of non-limiting examples with reference to the accompanying drawings, in which:
FIG. 1 illustrates an example networked computer system in which various embodiments may be practiced;
FIG. 2 illustrates an example graphical user interface for entity resolution operations.
FIG. 3 illustrates an example process performed by a computer application server in accordance with disclosed embodiments.
FIG. 4 illustrates a computer system upon which various embodiments may be implemented.

### DETAILED DESCRIPTION OF CERTAIN EMBODIMENTS

In the following description, for the purposes of explanation, numerous specific details are set forth in order to provide a thorough understanding of the example embodiment(s) of the present invention. It will be apparent, however, that the example embodiment(s) may be practiced without these specific details. In other instances, well-known structures and devices are shown in block diagram form in order to avoid unnecessarily obscuring the example embodiment(s).

### 1. GENERAL OVERVIEW

A system for managing entity resolution processes is disclosed. The system is programmed to determine whether incoming records correspond to known entities within an ontology framework. The system is also programmed to manage a graphical user interface (GUI) that allows customizing entity resolution operations and providing feedback on the determination results. The system is further programmed to use the provided feedback to improve machine learning for the entity resolution processes.

In some embodiments, given a list A of records each with several fields describing real-world characteristics, and a set B of several lists of records B 1, B2, ..., Bn, which represent real-world entities and tend to have more verified data for the fields, the system is programmed to ascertain, to a degree of confidence, whether a record in A describes a real-world entity represented by a record in the set B and which entity. For example, a record could represent a person with fields for name, address, and phone number. This process is called resolving the record into an entity. An entity resolution process generally involves trying to resolve one or more records into one or more entities. The system can be programmed to continuously receive at least new records into the list A.

In some embodiments, the system is programmed to resolve a specific record in the list A through several stages, including blocking, comparison, or clustering. For each stage, one or more methods can be applied. Each record and each method are among objects instantiated from an ontology of object types, which is subject to rules of revision, access control, versioning, or provenance tracking. Objects of the same object type can be easily swapped.

In some embodiments, the system is programmed to identify candidate pairings of records in the set B with a specific record in the list A using a blocking method, where the record is classified into one or more blocks based on features of the record. For example, a feature could be a word in a field or the number of words in a field. The system is programmed to then determine how likely the specific record matches the other record from the set B in each pairing and identify matches of records in the set B with the specific record using a comparison method. The comparison can be performed at the field level, with a field comparison method for each pairing of fields. The system can be programmed to apply machine learning techniques to represent portions of each record and to learn from user feedback on comparison results. For example, a transformer can be used to represent each record with one or more encodings of semantic information. The system is programmed to then select one of the matches as the final match and resolve the specific record to the particular entity represented by the final match when possible using a clustering method. The system can be programmed to manage each cluster of records that resolve to the same entity using machine learning techniques. For example, a large language model can be used to identify a representative of a cluster.

In some embodiments, the system is programmed to manage a GUI that allows a user to configure or monitor the entity resolution operations with graphical operations. The configuration can include specifying which method to use for a stage or how to execute each method. For example, a user could specify that the blocking stage is to be skipped by unchecking a checkbox or that a first blocking method is to be used instead of the second one by selecting the first blocking method from a menu. The monitoring can include submitting a request to resolve specific records in the list A, evaluate the result, and provide feedback on the result. For example, a user could review details of a match of two records and confirm or reject the match by pushing a corresponding button. As objects are created, updated, or otherwise accessed, appropriate rules of the ontology are triggered for proper functioning of the ontology.

The system disclosed herein has several technical benefits. The system improves entity resolution to achieve higher accuracy. By offering a plurality of methods for each stage, the system increases the performance metric known as recall or sensitivity. By applying deep learning and incorporating user feedback, the system further increases precision. The system also offers modulization, extensibility, and traceability for the entity resolution processes via the ontology framework, where users are allowed to easily add or remove methods, switch between methods, track the execution of these methods on various records, and similarly handle other types of objects.

### 2. EXAMPLE COMPUTING ENVIRONMENTS

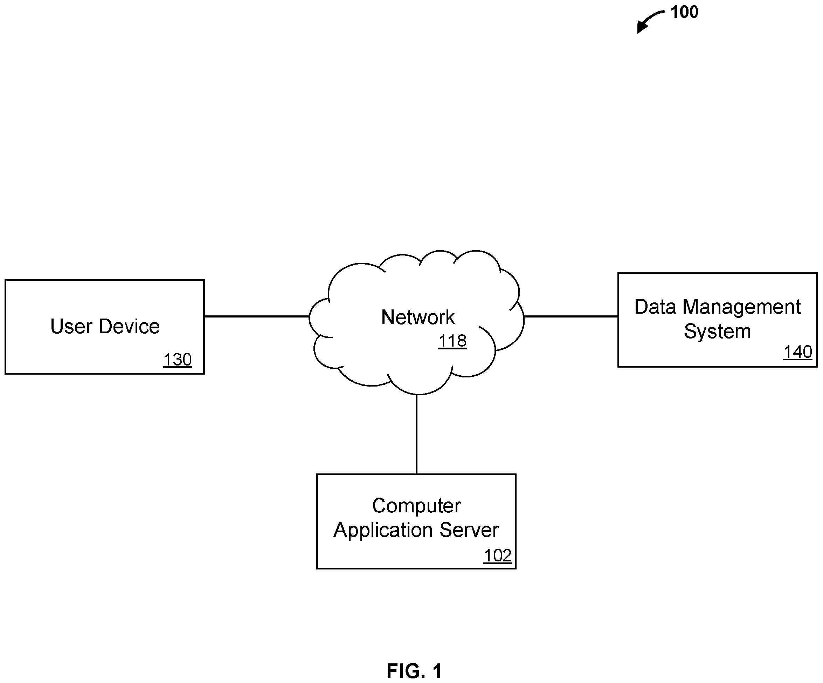

FIG. 1 is shown in simplified, schematic format for purposes of illustrating a clear example and other embodiments may include more, fewer, or different elements.

In some embodiments, a networked computer system 100 comprises a computer application server ("server") 102, a user device 130, and a data management system 140, which are communicatively coupled through direct physical connections or via a network 118.

In some embodiments, the server 102 is programmed or configured to manage entity resolution processes in accordance with user inputs within an ontology framework. The management can include preparing a GUI and delivering the GUI to associated input/output devices or to the user device 130. The server 102 can comprise any centralized or distributed computing facility with sufficient computing power in data processing, data storage, and network communication for performing the above-mentioned functions.

In some embodiments, the user device 130 is programmed or configured to configure or monitor entity resolution operations. The configuring and monitoring can include receiving a GUI from the server 102, presenting the GUI for user interaction, and processing user inputs locally or transmit them to the server 102 for further processing. The user device 130 can also be configured to provide records to be resolved. The user device 130 can comprise a personal computing device, such as s desktop computer, laptop computer, tablet computer, smartphone, or wearable device.

In some embodiments, the data management system 140 is programmed or configured to provide various target records potentially under strict security protocols, such as different sanction lists from government agencies. The data management system 140 can generally be similar to the server 102 and comprise any computing facility with sufficient computing power in data processing, data storage, and network communication for performing the above-mentioned functions.

The network 118 may be implemented by any medium or mechanism that provides for the exchange of data between the various elements of FIG. 1. Examples of the network 118 include, without limitation, one or more of a cellular network, communicatively coupled with a data connection to the computing devices over a cellular antenna, a near-field communication (NFC) network, a Local Area Network (LAN), a Wide Area Network (WAN), or the Internet, a terrestrial or satellite link.

In some embodiments, the server 102 is programmed to receive one or more target lists of records from one or more data management systems, such as the data management system 140. The server 102 is programmed to also receive a source list of records from a source device, such as the user device 130. The server 102 is programmed to then start an entity resolution process for the source list of records against the one or more target lists automatically or in response to a subsequent request from the source device. The server 102 can be programmed to deliver a GUI to a user device, such as the user device 130, to show progress of the entity resolution process in real time or upon further request. The server 102 can be programmed to receive user feedback on data produced from the entity resolution process via the GUI and improve any machine learning methods used for entity resolution with the user feedback.

### 3. FUNCTIONAL DESCRIPTIONS

In some embodiments, the server 102can be programmed to perform specific functions, as further discussed in various embodiments herein. These functions can be implemented as software components, general or special-purpose hardware components, firmware components, or any combination thereof.

In some embodiments, the server 102 is programmed to maintain an ontology, such as one using Palantir Foundry. The ontology can define all relevant object types, such as clusters, lists, records, fields, workflows, methods, configurations, or requests, as further discussed below. Actual objects are instantiated from the ontology. Similar structures, such as properties, dependencies, links, or versions, and similar operations, such as revision, access control, or provenance tracking at the object, property, row, or column level, apply to all object types.

### 3.1. DATA INGESTION

In some embodiments, the server 102 is programmed to maintain a first list of records to be resolved, and a second list of target records. For example, the first list can correspond to a list of corporations, and the second list can correspond to a list of parties to be sanctioned for having committed financial crimes. Each record may indicate the names, aliases, addresses, telephone numbers, connections to associates, companies owned, or other information.

In some embodiments, the server 102 is programmed to receive updates to the first list from one or more first sources, such as a client device. The rate of update can depend on how often new data becomes available at the one or more first sources. The server 102 can be configured to remove duplicate records, track when each record was inserted or updated (generally to correct errors), or save incremental changes under the rules of the ontology.

In some embodiments, the server 102 is programmed to receive updates to the second list from one or more second sources, such as a government management system. The rate of update can be controlled to efficiently capture changes at the one or more second sources. The server 102 can be configured to similarly remove duplicate records, track when each record was inserted or updated (generally to correct errors), or save incremental changes.

In some embodiments, as records in the first list are matched with records in the second list, the server 102 is programmed to maintain versions for each record in the second list and associate the version number with each match so that any subsequent update to a record in the second list would not negate an existing match. When a new version becomes available because a new record is received or an existing record is updated, the server 102 can be programmed to match each existing record in the first list with the new version in addition to matching each new record in the first list with the new version.

In some embodiments, the server 102 is programmed to clean up each record to facilitate downstream processing. The cleaning can include treating punctuation, casing, or spacing. The cleaning can also include stemming, standardizing formats for certain fields (e.g., phone numbers), or removing common, insignificant words (e.g., "the").

### 3.2 ENTITY RESOLUTION

In some embodiments, the server 102 is programmed to perform an entity resolution process automatically or in response to user requests in one or more stages, including blocking, comparison, or clustering.

### 3.2.1. BLOCKING

In some embodiments, an initial stage of an entity resolution process is to reduce the number of candidate pairs of records for further consideration. The process of classifying the records into blocks and identifying candidate pairs separately from each of the blocks is called blocking. The server is programmed to execute a blocking algorithm using user-specified or predetermined configurations on the first list and the second list. One example blocking algorithm is standard blocking by creating a block for each token in the records. For instance, a token can be a word or a string of consecutive, non-blank characters. Another example blocking algorithm is character-level blocking by creating a block for certain stretch of characters instead of an entire token, such as considering a Q-gram, an extended Q-gram, a suffix array, or an extended suffix array. The blocking step can be helpful because such syntax-based steps can quickly eliminate many pairs of records from further consideration

Some blocking algorithms could produce large blocks with many non-matching pairs. In other embodiments, the server 102 can be programmed to apply block cleaning techniques to reduce the number of blocks, such as pruning blocks when the size exceeds a threshold. The server 102 can also be programmed to apply comparison cleaning techniques to reduce the size of each block, such as meta-blocking.

In some embodiments, as indicated above, from the final list of blocks, the server 102 is programmed to generate the candidate pairs of records by performing a cross join of the set of records from the first list in each block with the set of records from the second list in the same block.

### 3.2.2. COMPARISON

In some embodiment, the server 102 is programmed to compare the two records in each candidate pair using user-specified or predetermined configurations to determine whether there is agreement at the field level. The configurations can indicate which fields of a record from the first list will be compared to which fields of a record from the second list (i.e., the field pairings), how each pair of fields will be compared, and the parameters (if any) to be used for the comparing.

In some embodiments, the server 102 is programmed to apply a field comparator for a pair of fields to obtain a field comparison score. Such a field comparator can measure syntactic similarities, such as a levenshtein distance. Such a field comparator can also take semantics into consideration by training machine learning models with a proper corpus, such as one that covers the tokens in the second list. For example, an encoding for a field can be generated as an aggregation of word embeddings produced by Word2Vec for the words in the field, or it can be generated using a transformer, such as BERT, for a denser representation. Then, the cosine similarity between two embeddings for two fields can be computed as the field comparison score.

In some embodiments, the server 102 is programmed to save all relevant information for each candidate pair of records or each pair of fields. For example, one single row can be used for each such pair, which identifies the two records, including version information, the field pairings, the field comparators, and the field comparison scores in the columns. The row can also identify a specification of configurations used for the entity resolution process, including version information, instead of specifically identifying the field pairings or the field comparators.

In some embodiment, the server 102 is programmed to compare the two records in each candidate pair using user-specified or predetermined configurations to determine whether they are a match. The configurations can indicate how the pair of records will be compared, and the parameters (if any) to be used for the comparing. A record comparator can take into consideration the field comparison scores for all pairs of fields in the pair of records to generate a match result, which can include a record comparison score. A record comparator can compute a weighted sum from the field comparison scores before applying one or more thresholds on the weighted sum, where the weights can be set manually, via linear regression using a training dataset including predetermined record comparison scores, or using another approach. A record comparator can also include a decision tree or another machine learning model pre-trained on a training dataset that includes not only a set of field comparison scores for each pair of records but also an indicator of whether the two records are considered as a match.

In some embodiments, the server 102 is programmed to compare the two records in each candidate pair using user-specified or predetermined configurations to determine whether there is agreement directly at the record level. Each record can be treated as an aggregate of all the fields, and a field comparator discussed above can be used to compare the two aggregates.

In some embodiments, the server 102 is programmed to accept user feedback on the match results, as further discussed below. The feedback can accept or reject a field match or a record match. At least the accepted matches can be added to any training dataset for a field comparator or a record comparator for future retraining. In addition, the server 102 can be programmed to save each match result and each user change as different versions.

### 3.2.3. CLUSTERING

In some embodiments, the server 102 is programmed to maintain a cluster for each record in the second list, as an enriched representation of the real-life entity represented by the record and available for downstream use. In general, each record in the first list is resolved to no more than one record in the second list and thus is assigned to no more than one cluster. The comparison stage discussed above can lead to a record from the first list being in multiple pairs of records, though. The server 102 can be programmed to apply an assignment algorithm to assign each record in the first list to one cluster, such as by prioritizing the pair where the record from the second list is associated with the largest cluster or the pair associated with the highest record comparison score.

In some embodiments, as a result of entity resolution, instead of synchronizing the record from the first list to that from the second list in a match, the record from the first list could be updated based on a representative of the cluster. In addition to updating the cluster with records in the first list as more matches become available, the server 102 could be programmed to replace the original record in the second list with the representative of the cluster.

In some embodiments, to determine a representative of a cluster, the server 102 is programmed to identify a medoid, namely a member of the cluster whose sum of dissimilarities to all members of the cluster is minimal based on a distance measure. The server 102 can also be programmed to prompt a large language model to summarize the list of records in the cluster.

In some embodiments, the server 102 is programmed to accept user feedback on the assignment results. The feedback can accept or reject an assignment of a record in the first list into a cluster associated with a record in the second list. In response to such user feedback to change cluster memberships, the server 102 can be programmed to recompute the representative of each updated cluster or re-execute the assignment algorithm on one or more other records in the first list against all the clusters including the updated clusters. Similar to the feedback on match results, at least the accepted assignments can be added to any training dataset for a field comparator or a record comparator for future retraining. In addition, the server 102 can be programmed to save each assignment result and each user change as different versions.

### 3.3. GRAPHICAL USER INTERFACE

In some embodiments, the server 102 is programmed to deliver a GUI to associated input/output devices or a user device with integrated input/output devices. The GUI allows a user to configure various aspects of an entity resolution process, including how to pair up the fields of two lists, which stages to include, which methods to use in each stage, or how to run a method. For example, for each stage, the GUI can show one or more predetermined methods while allowing a user to upload and specify a new method. The GUI can allow a user to switch to a new method, develop a workflow or pipeline having one or more stages, or issue other commands using only graphical operations without coding.

In some embodiments, the GUI allows a user to submit a request for entity resolution, evaluate the result, and submit feedback on the result, which is used for improving machine learning methods utilized in the entity resolution process. Such a request can specify two lists and any overwrites of preconfigured settings noted above. The result can include the outcomes of one or more stages of the entity resolution process. For the comparison stage, for example, the GUI can show each pair of fields, the field comparator used for each pair of fields, the parameter values used for each field comparator, the field comparison score produced by each field comparator, the weights assigned to each pair of fields, or the record comparison score produced by a record comparator. When a method used in the entity resolution process involves machine learning, the user feedback can be incorporated into the training data to update the machine learning model, as discussed above. Otherwise, just like the result itself, any user feedback on the result is treated as generating one or more versions of one or more objects subject to the rules of revision, access control, provenance tracking, or other operations of the ontology.

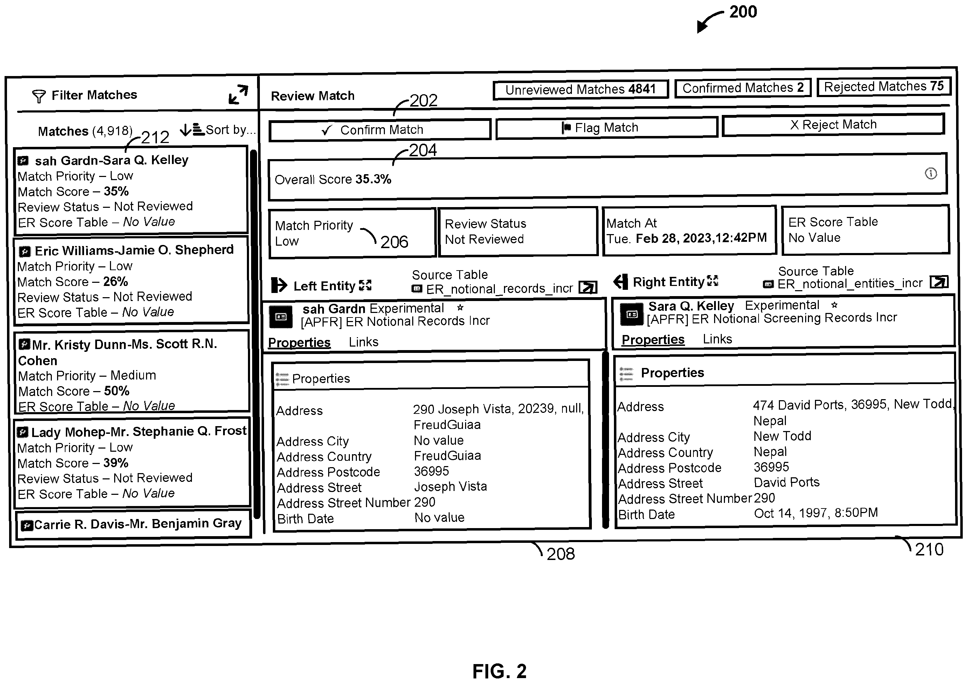

FIG. 2 illustrates an example graphical user interface for entity resolution operations. The GUI 200 allows a user to review or provide information regarding record matches for various purposes. For example, a user may use the GUI to observe an entity resolution process live, verify that important records were correctly resolved, or specifically offer feedback to improve entity resolution processes.

The GUI 200 includes a first section that shows two records, the source record 208 and the target record 210, generally two records that have been automatically matched together in the comparison stage or the clustering stage (through an assignment). For each record, the GUI 200 shows various details, including record-level data and field-level data. Specifically, the source record 208 has a record name of "sah Gardn" and a list of fields (indicated as properties), including an address country of "FreudGuiaa" and an address street of "Joseph Vista".

The GUI 200 further indicates a second section that shows match data, such as an overall score 204, which can be based on a record comparison score, and a match priority 206, which can indicate how good the match is based on the overall score 204, how important the match is that is inversely related to the number of target records matched with the source record 208, or how big the cluster is associated with the target record 210, for example. This second section also includes a list 202 of options for a user to confirm, reject, or flag the match. The GUI 200 can also allow a user to update the overall score 204 as more granular feedback. Any such user feedback can be used to improve machine learning utilized during the stages, as discussed above.

The GUI 200 includes a third section that shows a list 212 of entries corresponding to a list of matches, which can by default be the full list of generated matches or can be a select list based on one or more filter criteria, such as match date, flag status, or source record name. Each entry can show summary information regarding the corresponding match. A user can select one of these entries, in response to which the two records in the corresponding match can be displayed as the source record and the target record in the first section. Alternatively, the first section can show the two records from the latest match.

### 4. EXAMPLE PROCESSES

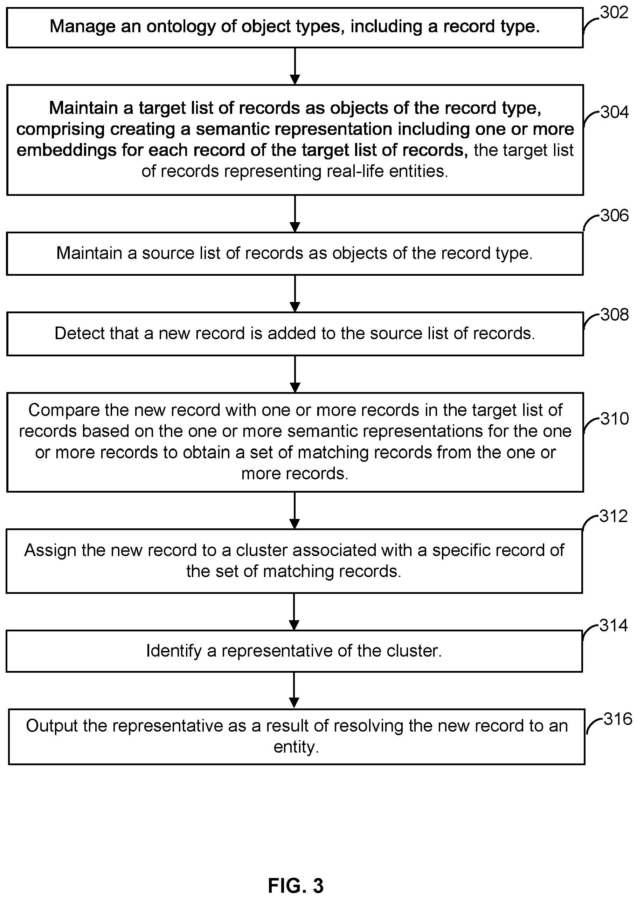

FIG. 3 illustrates an example process of managing an entity resolution process in accordance with some embodiments described herein. FIG. 3 is shown in simplified, schematic format for purposes of illustrating a clear example and other embodiments may include more, fewer, or different elements connected in various manners. FIG. 3 is intended to disclose an algorithm, plan, or outline that can be used to implement one or more computer programs or other software elements which when executed cause performing the functional improvements and technical advances that are described herein. Furthermore, the flow diagrams herein are described at the same level of detail that persons of ordinary skill in the art ordinarily use to communicate with one another about algorithms, plans, or specifications forming a basis of software programs that they plan to code or implement using their accumulated skill and knowledge.

In some embodiments, in step 302, the server 102 is programmed to manage an ontology of object types, including a record type.

In step 304, the server 102 is programmed to maintain a target list of records as objects of the record type. Specifically, the server is configured to create a semantic representation including one or more embeddings for each record of the target list of records, where the target list of records represent real-life entities.

In other embodiments, in creating a semantic representation for a particular record of the target list of records, the server 102 is configured to execute a transformer on the particular record. The transformer is trained on a corpus selected based on the target list of records.

In step 306, the server 102 is programmed to maintain a source list of records as objects of the record type.

In step 308, the server 102 is programmed to detect that a new record is added to the source list of records. In other embodiments, the server 102 is programmed to clean up the new record in terms of punctuation, casing, spacing, stemming, or format standardization.

In certain embodiments, the server 102 is configured to classify the new record into one or more blocks defined by a token of the new record or a portion thereof. In other embodiments, the server 102 is configured to also classify each record of the one or more records in the target list of records into at least a block of the one or more blocks.

In step 310, the server 102 is programmed to compare the new record with one or more records in the target list of records based on the one or more semantic representations for the one or more records to obtain a set of matching records from the one or more records.

The new record can have a first list of fields and a certain record of the one or more records can have a second list of fields. In certain embodiments, in comparing the new record with the certain record, the server 102 is configured to identifying a plurality of pairs, each pair including a first field from the first list of fields and a second field from the second list of fields. The server 102 is further configured to evaluate the two fields in each pair of the plurality of pairs to obtain a field comparison score. In addition, the server 102 is configured to aggregate the plurality of field comparison scores to obtain a record comparison score, where each record of the set of matching records has a record comparison score that satisfies a given condition. In other embodiments, the server 102 is further configured to create a new semantic representation including one or more embeddings for the new record, so that the evaluating comprising assessing two sets of embeddings respectively corresponding to the two fields.

In other embodiments, the server 102 is configured to receive a user confirmation of a match involving a matching record of the set of matching records and improve the creating or the comparing for a future record based on the user confirmation.

In yet other embodiments, the ontology of object types also includes a method type. The server 102 is configured to maintaining a list of methods for the comparing as objects of the method type. The server 102 is further configured to deliver a graphical user interface (GUI), which allows issuing a command to add a new method or replace a first method by a second method in the comparing using only one or more graphical operations.

In step 312, the server 102 is programmed to assign the new record to a cluster associated with a specific record of the set of matching records. In certain embodiments, the specific record is associated with a largest cluster or a highest record comparison score among the set of matching records.

In step 314, the server 102 is programmed to identify a representative of the cluster. In certain embodiments, to identify the representative, the server 102 is configured to obtain a summary of records in the cluster using a large language model.

In step 316, the server 102 is programmed to output the representative as a result of resolving the new record to an entity.

In certain embodiments, the server 102 is configured to receive a user input to reassign the new record to a second cluster. The server 102 is configured to then identify a first new representative of the cluster and a second new representative of the second cluster based on the reassigning. The server 102 is configured to also improve the creating or the comparing for a future record based on the user input.

In other embodiments, the ontology implements versioning for the object types. The server 102 is further programmed to save the specific record or the representative of the cluster as a new version of new record.

### 5. EXAMPLE IMPLEMENTATION

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

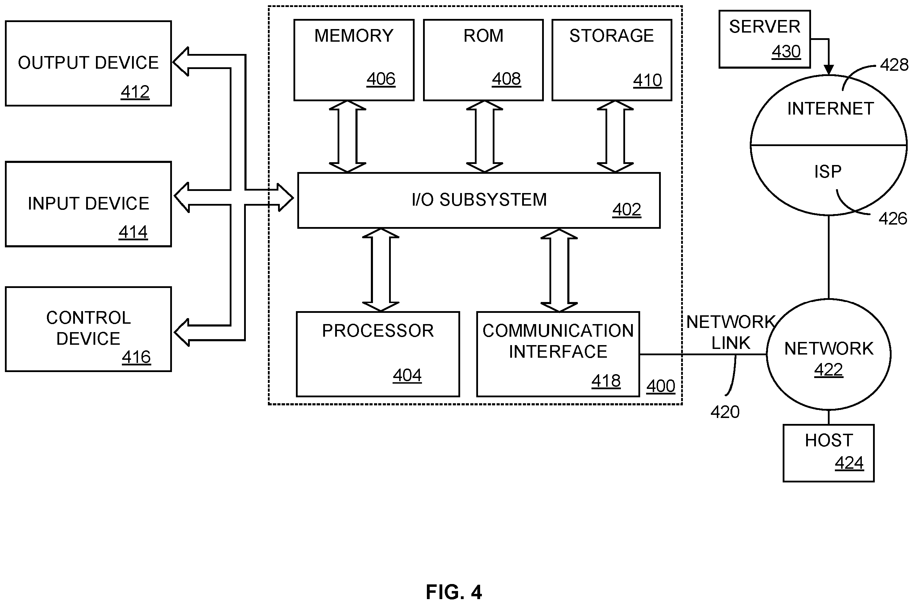

FIG. 4 is a block diagram that illustrates an example computer system with which an embodiment may be implemented. In the example of FIG. 4, a computer system 400 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 400 includes an input/output (I/O) subsystem 402 which may include a bus and/or other communication mechanism(s) for communicating information and/or instructions between the components of the computer system 400 over electronic signal paths. The I/O subsystem 402 may include an I/O controller, a memory controller and at least one I/O port. The electronic signal paths are represented schematically in the drawings, for example as lines, unidirectional arrows, or bidirectional arrows.

At least one hardware processor 404 is coupled to I/O subsystem 402 for processing information and instructions. Hardware processor 404 may include, for example, a generalpurpose microprocessor or microcontroller and/or a special-purpose microprocessor such as an embedded system or a graphics processing unit (GPU) or a digital signal processor or Advanced RISC Machines (ARM) processor. Processor 404 may comprise an integrated arithmetic logic unit (ALU) or may be coupled to a separate ALU.

Computer system 400 includes one or more units of memory 406, such as a main memory, which is coupled to I/O subsystem 402 for electronically digitally storing data and instructions to be executed by processor 404. Memory 406 may include volatile memory such as various forms of random-access memory (RAM) or other dynamic storage device. Memory 406 also may be used for storing temporary variables or other intermediate information during execution of instructions to be executed by processor 404. Such instructions, when stored in non-transitory computer-readable storage media accessible to processor 404, can render computer system 400 into a special-purpose machine that is customized to perform the operations specified in the instructions.

Computer system 400 further includes non-volatile memory such as read only memory (ROM) 408 or other static storage device coupled to I/O subsystem 402 for storing information and instructions for processor 404. The ROM 408 may include various forms of programmable ROM (PROM) such as erasable PROM (EPROM) or electrically erasable PROM (EEPROM). A unit of persistent storage 410 may include various forms of non-volatile RAM (NVRAM), such as flash memory, or solid-state storage, magnetic disk, or optical disk such as CD-ROM or DVD-ROM, and may be coupled to I/O subsystem 402 for storing information and instructions. Storage 410 is an example of a non-transitory computer-readable medium that may be used to store instructions and data which when executed by the processor 404 cause performing computer-implemented methods to execute the techniques herein.

The instructions in memory 406, ROM 408 or storage 410 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement Transmission Control Protocol/Internet Protocol (TCP/IP), Hypertext Transfer Protocol (HTTP) or other communication protocols; file processing instructions to interpret and render files coded using HTML, Extensible Markup Language (XML), Joint Photographic Experts Group (JPEG), Moving Picture Experts Group (MPEG) or Portable Network Graphics (PNG); user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or NoSQL, an object store, a graph database, a flat file system or other data storage.

Computer system 400 may be coupled via I/O subsystem 402 to at least one output device 412. In one embodiment, output device 412 is a digital computer display. Examples of a display that may be used in various embodiments include a touch screen display or a lightemitting diode (LED) display or a liquid crystal display (LCD) or an e-paper display. Computer system 400 may include other type(s) of output devices 412, alternatively or in addition to a display device. Examples of other output devices 412 include printers, ticket printers, plotters, projectors, sound cards or video cards, speakers, buzzers or piezoelectric devices or other audible devices, lamps or LED or LCD indicators, haptic devices, actuators, or servos.

At least one input device 414 is coupled to I/O subsystem 402 for communicating signals, data, command selections or gestures to processor 404. Examples of input devices 414 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 416, which may perform cursor control or other automated control functions such as navigation in a graphical interface on a display screen, alternatively or in addition to input functions. Control device 416 may be a touchpad, a mouse, a trackball, or cursor direction keys for communicating direction information and command selections to processor 404 and for controlling cursor movement on the output device 412. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 414 may include a combination of multiple different input devices, such as a video camera and a depth sensor.

In another embodiment, computer system 400 may comprise an internet of things (IoT) device in which one or more of the output device 412, input device 414, and control device 416 are omitted. Or, in such an embodiment, the input device 414 may comprise one or more cameras, motion detectors, thermometers, microphones, seismic detectors, other sensors or detectors, measurement devices or encoders and the output device 412 may comprise a special-purpose display such as a single-line LED or LCD display, one or more indicators, a display panel, a meter, a valve, a solenoid, an actuator or a servo.

When computer system 400 is a mobile computing device, input device 414 may comprise a global positioning system (GPS) receiver coupled to a GPS module that is capable of triangulating to a plurality of GPS satellites, determining and generating geo-location or position data such as latitude-longitude values for a geophysical location of the computer system 400. Output device 412 may include hardware, software, firmware, and interfaces for generating position reporting packets, notifications, pulse or heartbeat signals, or other recurring data transmissions that specify a position of the computer system 400, alone or in combination with other application-specific data, directed toward host computer 424 or server 430.

Computer system 400 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 400 in response to processor 404 executing at least one sequence of at least one instruction contained in main memory 406. Such instructions may be read into main memory 406 from another storage medium, such as storage 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage 410. Volatile media includes dynamic memory, such as memory 406. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 402. Transmission media can also take the form of acoustic or light waves, such as those generated during radio-wave and infra-red data communications.

Various forms of media may be involved in carrying at least one sequence of at least one instruction to processor 404 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 400 can receive the data on the communication link and convert the data to be read by computer system 400. For instance, a receiver such as a radio frequency antenna or an infrared detector can receive the data carried in a wireless or optical signal and appropriate circuitry can provide the data to I/O subsystem 402 such as place the data on a bus. I/O subsystem 402 carries the data to memory 406, from which processor 404 retrieves and executes the instructions. The instructions received by memory 406 may optionally be stored on storage 410 either before or after execution by processor 404.

Computer system 400 also includes a communication interface 418 coupled to I/O subsystem 402. Communication interface 418 provides a two-way data communication coupling to network link(s) 420 that are directly or indirectly connected to at least one communication network, such as a network 422 or a public or private cloud on the Internet. For example, communication interface 418 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 422 broadly represents a LAN, WAN, campus network, internetwork, or any combination thereof. Communication interface 418 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 418 sends and receives electrical, electromagnetic, or optical signals over signal paths that carry digital data streams representing various types of information.

Network link 420 typically provides electrical, electromagnetic, or optical data communication directly or through at least one network to other data devices, using, for example, satellite, cellular, Wi-Fi, or BLUETOOTH technology. For example, network link 420 may provide a connection through a network 422 to a host computer 424.

Furthermore, network link 420 may provide a connection through network 422 or to other computing devices via internetworking devices and/or computers that are operated by an Internet Service Provider (ISP) 426. ISP 426 provides data communication services through a world-wide packet data communication network represented as internet 428. A server 430 may be coupled to internet 428. Server 430 broadly represents any computer, data center, virtual machine, or virtual computing instance with or without a hypervisor, or computer executing a containerized program system such as DOCKER or KUBERNETES. Server 430 may represent an electronic digital service that is implemented using more than one computer or instance and that is accessed and used by transmitting web services requests, Uniform Resource Locator (URL) strings with parameters in HTTP payloads, application programming interface (API) calls, app services calls, or other service calls. Computer system 400 and server 430 may form elements of a distributed computing system that includes other computers, a processing cluster, server farm or other organization of computers that cooperate to perform tasks or execute applications or services. Server 430 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to interpret or render files coded using HTML, XML, JPEG, MPEG or PNG; user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. Server 430 may comprise a web application server that hosts a presentation layer, application layer and data storage layer such as a relational database system using structured query language (SQL) or NoSQL, an object store, a graph database, a flat file system or other data storage.

Computer system 400 can send messages and receive data and instructions, including program code, through the network(s), network link 420 and communication interface 418. In the Internet example, a server 430 might transmit a requested code for an application program through Internet 428, ISP 426, local network 422 and communication interface 418. The received code may be executed by processor 404 as it is received, and/or stored in storage 410, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 404. While each processor 404 or core of the processor executes a single task at a time, computer system 400 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Timesharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

### 6. EXTENSIONS AND ALTERNATIVES

In the foregoing specification, embodiments of the disclosure have been described with reference to numerous specific details that may vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction.

## Claims

1. A computer-implemented method of entity resolution based on ontology structures, comprising:
managing an ontology of object types, including a record type;
maintaining a target list of records as objects of the record type,
comprising creating a semantic representation including one or more embeddings for each record of the target list of records,
the target list of records representing real-life entities;
maintaining a source list of records as objects of the record type;
detecting that a new record is added to the source list of records;
comparing the new record with one or more records in the target list of records based on the one or more semantic representations for the one or more records to obtain a set of matching records from the one or more records;
assigning the new record to a cluster associated with a specific record of the set of matching records;
identifying a representative of the cluster; and
outputting the representative as a result of resolving the new record to an entity.

2. The method of claim 1, creating a semantic representation for a particular record of the target list of records comprising
executing a transformer on the particular record,
the transformer being trained on a corpus selected based on the target list of records.

3. The method of any preceding claim, further comprising cleaning up the new record in terms of punctuation, casing, spacing, stemming, or format standardization.

4. The method of any preceding claim, further comprising
classifying the new record into one or more blocks defined by a token of the new record or a portion thereof,
each record of the one or more records in the target list of records being classified into at least a block of the one or more blocks.

5. The method of any preceding claim, the comparing comprising, for the new record having a first list of fields and a certain record of the one or more records having a second list of fields:
identifying a plurality of pairs, each pair including a first field from the first list of fields and a second field from the second list of fields;
evaluating the two fields in each pair of the plurality of pairs to obtain a field comparison score;
aggregating the plurality of field comparison scores to obtain a record comparison score,
each record of the set of matching records having a record comparison score that satisfies a given condition.

6. The method of claim 5, further comprising:
creating a new semantic representation including one or more embeddings for the new record,
the evaluating comprising assessing two sets of embeddings respectively corresponding to the two fields.

7. The method of any preceding claim, further comprising:
receiving a user confirmation of a match involving a matching record of the set of matching records;
improving the creating or the comparing for a future record based on the user confirmation.

8. The method of any preceding claim, the specific record being associated with a largest cluster or a highest record comparison score among the set of matching records.

9. The method of any preceding claim, the identifying comprising obtaining a summary of records in the cluster using a large language model.

10. The method of any preceding claim, further comprising:
receiving a user input to reassign the new record to a second cluster;
identifying a first new representative of the cluster and a second new representative of the second cluster based on the reassigning;
improving the creating or the comparing for a future record based on the user input.

11. The method of any preceding claim, the ontology of object types including a method type, further comprising:
maintaining a list of methods for the comparing as objects of the method type;
delivering a graphical user interface (GUI), which allows issuing a command to add a new method or replace a first method by a second method in the comparing using only one or more graphical operations.

12. The method of any preceding claim, the ontology implementing versioning for the object types, further comprising saving the specific record or the representative of the cluster as a new version of new record.

13. A system for entity resolution based on ontology structures, the system being configured to perform the method of any preceding claim.

14. Computer program instructions, optionally stored on a non-transitory, computer-readable storage medium, which when executed cause one or more processors to perform the method of any of claims 1 to 12.
